# EUROPEAN PATENT APPLICATION

(11) **EP 3 834 981 A1**
(43) Date of publication of application: **16.06.2021**
(21) Application number: 19216043.0
(22) Date of filing: 13.12.2019
(51) Int. Cl.: B23K 35/02, B23K 35/28, B32B 15/01, C22C 21/02

(54) **MULTI-LAYERED ALUMINIUM BRAZING SHEET MATERIAL**

(71) Applicant: Aleris Rolled Products Germany GmbH, 56070 Koblenz (DE)
(72) Inventor: KIRKHAM, Steven, 56070 Koblenz (DE)
(74) Representative: Dey, Michael

(57) **Abstract**

The invention relates to a multi-layered brazing sheet material comprising of an aluminium core alloy layer provided with a first brazing clad layer material on one or both sides of said aluminium core layer and at least one second brazing clad layer material positioned between the aluminium core alloy layer and the first brazing clad layer material, wherein the second brazing clad layer material is an Al-Si alloy brazing material having 11% to 14% Si, up to 4.5% Zn and up to 0.25% Mg, and wherein the first brazing clad layer material is an Al-Si alloy brazing material having 6% to 9% Si, up to 1.5% Zn and up to 0.25% Mg.

## Description

### FIELD OF THE INVENTION

The invention relates to a multi-layered aluminium alloy brazing sheet material or product comprising of an aluminium core alloy layer provided with an Al-Si alloy brazing clad layer material on one or both sides of said aluminium core layer.

The invention further relates to a brazed assembly manufactured in a brazing operation, the brazed assembly comprising various components and at least one component being made from the multi-layered aluminium alloy brazing sheet material according to this invention.

### BACKGROUND TO THE INVENTION

Substrates of aluminium or aluminium alloy in the form of sheet or extrusion, are used to make shaped or formed products. In some of these processes parts of (shaped) aluminium comprising substrates are interconnected. One end of a substrate may be interconnected with the other end or one substrate may be assembled with one or more other substrates. This is commonly done by brazing. In a brazing process, a brazing filler metal or brazing alloy or a composition producing a brazing alloy upon heating is applied to at least one portion of the substrate to be brazed. After the substrate parts are assembled, they are heated until the brazing filler metal or brazing alloy melts. The melting point of the brazing material is lower than the melting point of the aluminium substrate or aluminium core sheet.

Brazing sheet products find wide applications in heat exchangers and other similar equipment. Conventional brazing products have a core of rolled sheet, typically, but not exclusively an aluminium alloy of the 3xxx-series, having on at least one surface of the core sheet an aluminium brazing clad layer (also known as an aluminium cladding layer). The aluminium brazing clad layer is made of a 4xxx-series alloy comprising silicon at its main alloying constituent in an amount in the range of 4 to 20 wt.%. The aluminium brazing clad layer may be coupled or bonded to the aluminium core alloy in various ways known in the art, for example by means of roll bonding, cladding spray-forming or semi-continuous or continuous casting processes.

These aluminium brazing clad layers have a liquidus temperature typically in the range of about 540°C to 615°C.

The aluminium brazing clad layers are generally very thin in order to save material and also not to negatively influence the properties of the aluminium core material provided with the brazing sheet product. Due to the increasing reduction of the thickness of the aluminium brazing clad layers and of the core material, increased demands are placed on the structure of the aluminium brazing clad layers. In the preparation of the various components of a heat exchanger the components are formed, for example by means of bending, folding, tube forming or deep drawing. If the primary Si particles in the aluminium brazing clad layer are too large, this may result is cracking of the brazing clad layer and under circumstances the crack may extend into the core alloy layer. Large primary Si particles may lead also to a local surplus of Si in the brazing clad layer and that the core material is thus likewise melted locally in the surrounding area of the primary Si particles. This then leads, during the brazing process, to erosion ("burning through") or the formation of a hole in the product having the aluminium brazing clad layer. The avoidance of these primary Si particles with a size of more than about 10 µm, in particular of more than about 20 µm, means that the brazing process can be carried out faultlessly and that there is no local melting of the aluminium alloy core material. This is in particular applicable for aluminium brazing clad layers and aluminium alloy core layers that are particularly thin.

Patent document WO-2012/098233-A1 (Hydro) addresses the problem of controlling the size of the primary Si particles by providing an aluminium alloy product with an aluminium solder layer or brazing clad layer, wherein the aluminium alloy of the aluminium solder layer has the following proportions of alloying components, in wt.%: 4.5%-12% Si, P≦10ppm, B≦10ppm, 30-240ppm Ti, Fe≦0.8%, Cu≦0.3%, Mn≦0.10%, Mg≦2.0%, Zn≦0.20%, Cr≦0.05%, the remainder being aluminium and unavoidable impurities, and the aluminium solder layer is free from primary Si particles with a size of more than 10 microns. This is achieved by using pure source materials having very low levels of P and B in the preparation of the aluminium alloy melt and whereby for grain refining purposes only Ti is added to the aluminium alloy melt and not Ti-B based grain refiners. It is reported that this approach allows for the production is extremely thin solder layers with thicknesses from 5-20 microns. A disadvantage of using very pure source material is that the resultant product becomes much more expensive.

Patent document WO-2016/102209-A1 (Hydro) provides another approach of controlling the size of the primary Si particles in the aluminium soldering layer or brazing clad layer. In this approach an ingot for producing an aluminium alloy product by rolling consisting of an aluminium solder alloy having the following proportions as alloying constituents in wt.%: 4.5%-12% Si, and optionally one or more of the following proportions as alloying constituents, in wt.%: Ti≦0.2%, Fe≦0.8%, Cu≦0.3%, Mn≦0.10%, Mg≦2.0%, Zn≦0.20%, Cr≦0.05%, P at most 30 ppm and preferably at most 10 ppm, with the remainder aluminium and unavoidable impurities, and wherein boron is additionally and purposively added as an alloying constituent, wherein boron is added to the alloy such that the boron content is at least 100 ppm and preferably less than 1,000 ppm, and the aluminium alloy is said to be free from primary Si particles having a size of more than 20 microns in particular 10 microns.

There is design pressure to down-gauging material for cost reduction reasons. This increases the relative thickness of the brazing clad layer as the whole system is thinner, so Si related issues become more prevalent. Hence there is a need for further improved brazing sheet products able to cope with aluminium brazing layers having large primary Si particles.

### DESCRIPTION OF THE INVENTION

As will be appreciated herein below, except as otherwise indicated, aluminium alloy designations and temper designations refer to the Aluminium Association designations in Aluminium Standards and Data and the Registration Records, as published by the Aluminium Association in 2019, and frequently updated, and are well known to the person skilled in the art. The temper designations are laid down in European standard EN515.

For any description of alloy compositions or preferred alloy compositions, all references to percentages are by weight percent unless otherwise indicated.

The term "up to" and "up to about", as employed herein, explicitly includes, but is not limited to, the possibility of zero weight-percent of the particular alloying element to which it refers. For example, up to about 0.20% Cr may include an aluminium alloy having no Cr.

It is an object of the invention to provide a brazing sheet product or material able to cope with one or more aluminium alloy brazing layers having large, typically of more than 20 microns in equivalent diameter, primary Si particles should these occur in the aluminium alloy brazing layer.

It is another object of the invention to provide a brazing sheet material able to cope with one or more aluminium alloy brazing layers having large, typically of more than 20 microns in equivalent diameter, primary Si particles should these occur in the aluminium alloy brazing layer and is for use in a controlled atmosphere brazing process.

These and other objects and further advantages are met or exceeded by the present invention providing a multi-layered brazing sheet material comprising of an aluminium alloy core layer having a first brazing clad layer material on one or both sides of said aluminium core layer and at least one second brazing clad layer material positioned between the aluminium alloy core layer and the first brazing clad layer material, wherein the second brazing clad layer material is an Al-Si alloy brazing material having about 11% to 14% Si, up to about 7% Zn and up to about 0.25% Mg, and wherein the first brazing clad layer material is an Al-Si alloy brazing material having about 6% to 9% Si, up to about 1.5% Zn and up to about 0.25% Mg.

In accordance with the invention it has been found that in rolled Al-Si alloy brazing materials having about 6% to 9% Si the amount of large primary Si particles is significantly lower or even absent compared to rolled Al-Si brazing materials having about 11% to 14% Si and by placing a first brazing clad layer material on the outer surface of the second brazing clad layer material having a significantly higher Si-content the occurrence of cracks on the surface of the multi-layered brazing sheet product due to large primary Si particles in a forming step is avoided. The material forming characteristics are significantly improved. During a brazing operation the brazing clad layer materials form one filler metal to form a good joint and levelling out any compositional difference present prior to the brazing operation. Furthermore, it limits Si diffusion into adjacent thin fin structures and slows down any adverse liquid film migration.

In the multi-layered brazing sheet material according to the invention the core alloy layer is made of an aluminium alloy. The core alloys are preferably selected from the group of 2XXX-, 3XXX-, 5XXX-, or 6XXX-series aluminium alloys, for example an AA3003, AA3005, AA6060 or AA6063-type alloy.

In an embodiment the aluminium core alloy layer is made from a 3XXX-series aluminium alloy.

In an embodiment the aluminium core alloy layer is made from a 3XXX-series aluminium alloy consisting of, in wt.%:
about 0.5% to 1.8% Mn, preferably about 0.6% to 1.5%;
up to 1.25% Cu, preferably up to 1.10%, and preferably up to 0.25% or in a range of 0.20% to 1.25%;
up to 0.4% Mg, and preferably up to 0.30%;
up to 0.9% Si, and preferably up to 0.5%;
up to 0.7% Fe, preferably up to 0.5%, and more preferably in a range of 0.10% to 0.50%;
up to 0.25% Cr, preferably up to 0.20%, and more preferably up to 0.09%, and most preferably up to 0.04%;
up to 0.25% Zr, preferably up to 0.09%, and more preferably up to 0.04%;
up to 0.20% Ti, preferably 0.01% to 0.20%, more preferably 0.01% to 0.12%;
up to 1.7% Zn, preferably up to 1.2%, more preferably up to 0.5%, and most preferably up to 0.3%;
balance aluminium and impurities. Typically impurities are each up to 0.05% maximum and in total about 0.25% maximum, and preferably in total not exceeding about 0.15%.

According to this invention the first Al-Si alloy brazing clad layer material comprises about 6% to 9% Si, up to about 1.5% Zn and up to about 0.25% Mg. In an embodiment the upper-limit for the Si content is about 8.5%. And in accordance with the invention it has been found that the Mg content in the first Al-Si alloy brazing clad layer material should be kept low and should more preferably be less than about 0.15%. On a more preferred basis it is an Al-Si brazing alloy being Mg-free to limit the formation of an oxide layer during a brazing operation. In practical terms this would mean that Mg is present at a very low level of an impurity or incidental element, typically <0.05%, and ideally at a level of <0.02%.

According to this invention the second Al-Si alloy brazing clad layer material comprises about 11% to 14% Si, up to about 7% Zn and up to 0.25% Mg. In an embodiment the upper-limit for the Si content is less than 13%. And according to the invention it has been found that the Mg content in the second Al-Si alloy brazing clad layer material should be kept low and should more preferably be less than about 0.15%, and on a most preferred basis is up to 0.05%.

Ideally, the Si content in the first and second Al-Si alloy brazing layer material is selected such that the sum of the Si contents of both layers is in a range of about 7% to 12.5%, and preferably in the range of about 7.5% to 12%. In a more preferred embodiment the sum of the Si content is in a range of 9% to 12%, and most preferably 9% to 11%.

The amount of Fe present in the brazing clad layer materials, both for the first and second brazing clad layer material and optional third brazing clad layer material, depends primarily on the origin of the aluminium alloy material and can be up to about 0.8%, and preferably is not more than about 0.6%. As grain refiner element Ti can be present in the first and second brazing clad layer material in a range of up to about 0.2%, preferably up to 0.15%. Also Cu can be present as a tolerable impurity element, typically to a level of up to about 0.3%, but preferably does not exceed about 0.1%, and more preferably does not exceed about 0.03%. The balance is made by unavoidable impurities and aluminium. The unavoidable impurities are typically present up to 0.05% each and the total up to 0.15%.

In an embodiment Mn can be present in the first and/or in the second brazing clad layer material as a tolerable impurity element, typically to a level of up to about 0.2%, and preferably up to about 0.1%.

In another embodiment Mn can be present in the first and/or in the second brazing clad layer material in the range of about 0.2% to 0.8% to improve on the corrosion resistance of the multi-layered aluminium brazing sheet material. At a level below about 0.2% the effect of improved corrosion resistance by the Mn addition is not found. Preferably the amount of Mn is at least about 0.3% to provide improved corrosion resistance. With a view to the properties of the alloy, the amount of Mn should be not more than 0.8%, since above this level the improved corrosion resistance may be less. In the embodiment where Mn is purposively added it is preferred that the Mn/Fe ratio in weight percent is at least 1, and more preferably at least 2.

In the embodiment where Mn is purposively added to one or both of the first and second brazing clad layer materials, it is preferred to have a difference in Mn levels between the two adjacent brazing clad layer materials of at least about 0.1%, and preferably of at least about 0.2%. A difference in Mn levels is of assistance as a quality control means for the brazing clad layer thickness, e.g. by means of etching techniques regular in the art. During a brazing operation the brazing clad layer materials form one filler metal to form a joint and levelling out any compositional difference present prior to the brazing operation.

In an embodiment each of the Al-Si brazing clad layer materials, i.e. first, second and optional third layer, have any Zn present as a tolerable impurity element up to about 0.4%, and preferably up to about 0.2%.

In another embodiment the second brazing clad layer material has a purposive addition of Zn in a range of up to about 7%. In an embodiment the upper-limit for the Zn content is about 6.0%. The lower-limit for the Zn content is preferably at least about 1%, and more preferably at least about 1.5%, and most preferably at least about 2.0%. It is an important aspect of this embodiment that the first brazing clad layer material has a significantly lower amount of Zn and limits excessive Zn evaporation during a brazing cycle. The same is applicable for the optional third brazing clad layer material wherein the low Zn content prevents excessive Zn diffusion into the core layer material. The first and optional third brazing clad layer material have a Zn content of at most 1.5%, preferably of at most about 1.0%, and most preferably of at most about 0.5%.

In an embodiment the Zn content of the second brazing clad layer material is at least 200% of the Zn content of each of the first and optionally third brazing clad layer material. In an embodiment the difference is at least 300% and more preferably at least 400%.

In another embodiment of the second Al-Si brazing layer material Cu is purposively added in a range of about 1.0% to 2.5%, and preferably in a range of 1.0% to 2.5%. The Cu in combination with a purposive presence of Zn in a range of 1% to 6.0%, and preferably 1% to 5%, and more preferably 1% to 3%, provides a brazing filler alloy having a liquidus temperature in a range of 560°C to 590°C.

During a brazing operation the multiple brazing clad layer materials on one side of the core alloy layer form one filler metal to form a joint and levelling out any compositional difference present prior to the brazing operation. The purposive addition of Zn provides for enhanced post-braze corrosion protection of the multi-layered brazing sheet product. This alloying element improves the corrosion resistance of the core material by making the combined Al-Si brazing materials more sacrificial with respect to the core material, in a localised or stratified way, with relation to material depth. When the amount is less than the lower limit the sacrificial anode effect is not sufficient to produce the sacrificial anode effect, and when more than the upper limit is present it does not provide any further improvement on the corrosion resistance, whereas the aluminium alloy is more difficult to manufacture and the final product may be prone to Zn braze fillet enrichment. The purpose addition of Zn to a brazing clad layer for this effect is known in the art. However, the significant difference in Zn content between the various Al-Si brazing clad layer materials prevents excessive Zn evaporation in the heat-up phase and the brazing phase of a brazing cycle. As the first brazing clad layer material has a significant lower Zn content, and preferably has no purposive addition of Zn, it acts as a physical barrier and thus limits Zn evaporation.

In the table below the various embodiments with respect to the Zn content in the various brazing clad layer materials are summarized.

| | **First brazing layer material** | **Second brazing layer material** | **Optional third brazing layer material** |
|---|---|---|---|
| **Embodiment 1** | ≤0.4% Zn | ≤0.4% Zn | ≤0.4% Zn |
| **Embodiment 2** | ≤1.5% Zn | ≤7% Zn | ≤1.5% Zn |
| **Embodiment 2 (preferred)** | ≤1.0% Zn | 1%-7% Zn | ≤1.0% Zn |
| **Embodiment 2 (more preferred)** | ≤0.5% Zn | 1.5%-6.0% Zn | ≤0.5% Zn |
| **Embodiment 2 (most preferred)** | ≤0.5% Zn | 2.0%-6.0% Zn | ≤0.5% Zn |

In an embodiment each of the first or second Al-Si alloy brazing clad layer materials further contains one or more wetting elements. Preferably the wetting elements are selected from the group comprising Bi, Pb, Li, Sb, Se, Y, and Th, and wherein the total amount of the wetting elements is in a range of about 0.01% to 0.5%. In a preferred embodiment the element Bi is selected from the group of wetting elements and is in a range of about 0.01% to 0.5%, and preferably in a range of about 0.01% to 0.25%, as being the most efficient wetting element for this purpose in this alloy system during a brazing operation.

Preferably the wetting agent is added to the second brazing clad layer material.

In an embodiment each of the first, second and optional third Al-Si brazing clad layer materials are substantially free of the Si modifying elements Sr and Na, often used alone or combination for Al-Si foundry alloys to produce for example die-cast products. With "substantially free" is meant that no purposeful addition of Sr and/or Na was made to the chemical composition but that due to impurities and/or leaking from contact with manufacturing equipment, trace quantities of Sr and/or Na may nevertheless find their way into the alloy product. For example, less than 10 ppm Sr, and preferably less than 5 ppm Sr, is an example of a trace quantity. And less than 10 ppm Na, and preferably less than 3 ppm Na, is another example of a trace quantity.

There are several possible configurations for the multi-layered brazing sheet material according to the invention, for example, in an embodiment the aluminium core alloy layer is provided on one side with the first Al-Si alloy brazing clad material layer and with the second Al-Si alloy brazing clad material positioned between the core alloy layer and said first Al-Si alloy brazing clad material, and whereby the other side of the core layer is bare such that the brazing sheet material comprises of a three-layer configuration.

In an alternative embodiment of the multi-layered brazing sheet material according to this invention the core alloy layer is provided on both sides with the first Al-Si alloy brazing clad material layer and with the second Al-Si alloy brazing clad material positioned between the core alloy layer and the first Al-Si alloy brazing clad material. When both sides of the core layer are clad in the same manner, the brazing sheet material comprises of at least a five-layer configuration.

In another embodiment, when one side of the aluminium core alloy layer is clad with the first and second Al-Si alloys brazing clad material layers according to this invention, on the other side of the core alloy layer an outerlayer can be applied. The outerlayer or outerliner would generally be of an aluminium alloy tailored to provide high corrosion resistance or even corrosion resistance combined with erosion resistance in the environment to which that face of the multi-layered brazing sheet material is exposed, for example when used as a waterside liner in a heat exchanger. An example of a suitable outerlayer would be an aluminium alloy having a purposive addition of Zn (up to about 6%), such as for example an AA7072-series alloy.

In yet another embodiment a further aluminium alloy layer is interposed between the core alloy layer and the second Al-Si alloy brazing clad layer material. For example a further or third aluminium alloy layer may be applied for example to limit diffusion of alloying elements from the core layer to the brazing layer or to further improve on the corrosion performance of the brazing sheet product. In a particular embodiment the third aluminium alloy layer is a third brazing clad layer material positioned between the aluminium core alloy layer and the second braze clad layer material, and wherein the third brazing clad layer material is an Al-Si alloy brazing material having about 6% to 9% Si, up to about 1.5% Zn and up to about 0.25% Mg. More preferably the third brazing clad layer material has a composition within the compositional ranges of the first braze clad layer material as herein set forth and claimed. The use of a rolled third brazing clad layer material having a significantly lower Si content compared to the second brazing clad layer material it is avoided that any cracks occurring during a forming step, e.g. bending or a tube forming operation, due to large primary Si particles potentially present in the second brazing clad layer material do not extend into the core layer material. In addition, the use of a third brazing clad layer material avoids any burning through, in particular for very thin gauge brazing sheet products. Furthermore, the use of a third brazing clad layer material limits excessive Zn diffusion from the second brazing clad layer material into the aluminium core layer should there be a purposive addition of Zn in said second brazing clad layer material. It acts as a physical barrier and due to a lower Si content and a lower Zn content compared to the second brazing clad layer material, the third brazing clad layer material has a higher liquidus temperature and thus melt later in the brazing cycle and thus limits the Zn diffusion at this phase. It also supports the control and limitation of pre-brazing diffusion of Mg and Zn during heat-treatment steps in the multi-layer brazing sheet material production.

The multi-layered brazing sheet material according to this invention can be manufactured via various techniques. For example, by means of roll bonding as is well known in the art, and which method is preferred. The process may generally comprise the following steps:
- casting the different aluminium alloys to obtain rolling blocks;
- scalping of the blocks on either side to remove surface segregation zones originating from the casting process and to improve product flatness;
- preheating of the brazing material blocks at 400°C to 550°C;
- hot rolling of the individual brazing material blocks until the desired thickness to provide multiple hot rolled clad liners;
- alternatively hot rolling the individual brazing material blocks to intermediate thickness and stacking the various brazing materials at intermediate thickness and further hot rolling the stack to provide a hot rolled clad liner of required thickness composed of two or more brazing material layers;
- optionally homogenizing the aluminium core alloy block at 500°C to 630°C for at least 1 hour, preferably 1 to 20 hours;
- assembling the core alloy block with at least on one face, optionally on both faces, the rolled clad liner(s) to obtain a sandwich;
- preheating the sandwich at 400°C to 550°C;
- hot rolling the sandwich until an intermediate thickness, for example 2 to 10 mm; cold rolling the hot rolled sandwich until the desired final thickness to obtain a multi-layered brazing sheet product;
- optionally annealing at 200°C to 480°C to obtain a multi-layered brazing sheet product of the desired temper, for example O-temper, H1x-temper, H2x-temper or H3x-temper.

Alternatively, on a less preferred basis, one or more of the Al-Si brazing material layers can be applied onto the core alloy layer by means of thermal spraying techniques. Or alternatively, the core aluminium alloy layer and the second Al-Si alloy brazing clad material can be manufactured by means of casting techniques, for example as disclosed in international patent document WO-2004/112992, where after the first Al-Si alloy brazing clad material can be applied by means of for example roll bonding or thermal spraying techniques.

The multi-layered brazing sheet material according to the invention has a typical thickness at final gauge in the range of about 0.05 mm to 10 mm, and preferably about 0.05 mm to 4 mm.

Each of the first Al-Si alloy brazing clad material layer and the optional third Al-Si alloy brazing clad material have preferably a thickness which is about 1% to 15% of the entire thickness of multi-layered brazing sheet material. The second Al-Si alloy braze clad material layer has a thickness of about 3% to 20%, and preferably about 3% to 15%, of the entire thickness of the multi-layered brazing sheet material. In an embodiment the first and second Al-Si alloy braze clad material layers may have about equal thicknesses. In an embodiment each of the first and optional third Al-Si alloy braze clad material layers have a thickness thinner than the second Al-Si alloy braze clad material layer. In this way the good fluid flow of the molten filler metal during a brazing operation due to the combined high Si content is maintained.

The sum of the thicknesses of the first and second Al-Si alloy braze clad material layers applied on a side of the core alloy layer are in a range of about 4% to 30%, and preferably about 4% to 20%, of the entire thickness of the aluminium alloy brazing sheet material.

Preferably the sum of the thicknesses of the first, second and optional third Al-Si alloy brazing clad material layers applied on a side of the core alloy layer are in a range of about 4% to 25% of the entire thickness of the aluminium alloy brazing sheet material.

In an embodiment of the invention the multi-layered brazing sheet material is provided in an O-temper, and which is fully annealed.

In an embodiment of the invention the multi-layered brazing sheet material is provided in a H3x-temper, H2x-temper or H1x-temper, and wherein x is 1, 2, 3, 4, 5, 6, 7 or 8, such as for example the H14, H18, H22, H24 and H26 temper.

In a further aspect of the invention it relates to the use of the multi-layered brazing sheet material or product for the production, preferably by means of controlled atmosphere brazing, of a heat exchanger e.g. of a motor vehicle, and as such, the multi-layered brazing sheet material is suitable for being applied in heat exchangers for powertrain and engine cooling radiators, low temperature radiators, direct air-to-air charge air cooling ("CAC") or intercooling, air-to-water CAC, water-to-air CAC, air-to-refrigerant CAC, refrigerant-to-air CAC, air-to-refrigerant evaporators, air-to-refrigerant condensers, water-to-refrigerant evaporators, water-to-refrigerant condensers, heater cores, exhaust gas cooling, exhaust gas recirculation systems, hybrid cooling system, two-phase cooling systems, oil coolers, fuel coolers, material for battery cooling systems, chillers, cold plates, heat recovery systems, etc.

In a further aspect of the invention there is provided an article comprising at least two formed members joint by brazing, in particular a heat-exchanger of a motor vehicle, incorporating at least the multi-layered brazing material according to this invention as one of the formed members.

In another aspect of the invention there is provided a method of manufacturing an article joined by means of brazing or an assembly of brazed components, comprising the steps of, in that order:
(a) providing and forming the components of which at least one is made from a multi-layered brazing sheet material according to this invention;
(b) assembling the components into an assembly;
(c) brazing the assembly in a controlled inert gas atmosphere at a brazing temperature, preferably at a temperature in a range of 580°C to 615°C, for a period long enough for melting and spreading of the filler material to form a joint; and
(d) cooling of the brazed assembly, typically to below 100°C and more preferably to ambient temperature.

Preferably the brazing process is carried out in a dry no oxygen containing atmosphere, preferably using the inert environment of nitrogen, but for example also argon can be used.

Preferably, the brazing process uses a flux, for example the known process called Nocolok®, and variations thereof, and is well known to the person skilled in the art. In view of the very low Mg content in the various brazing clad layers materials the multi-layered brazing sheet product is not suitable for use in a vacuum brazing process.

### DESCRIPTION OF THE DRAWING

The invention shall now be described with reference to the appended drawings, in which:

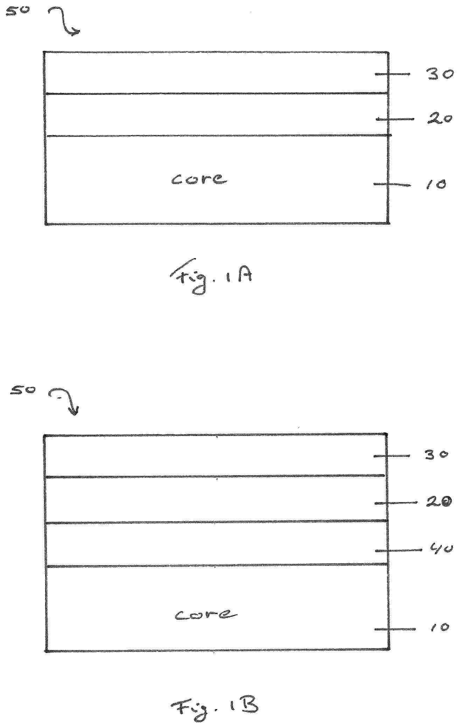

Figs. 1A and 1B are schematic representations of non-limiting embodiments of the multi-layered brazing sheet product according to the invention.
Fig. 1A shows a multi-layered brazing sheet product 50 comprising of an aluminium alloy core layer 10 provided on one side with a first brazing clad layer 30 and a second brazing clad layer 20 interposed between the core layer 10 and the first brazing clad layer 30. This embodiment provides a 3-layered brazing sheet product. In another embodiment (not shown) the first brazing clad layer 30 and the second brazing clad layer 20 are applied on each side of the core layer 10 and providing a 5-layered brazing sheet product.
Fig. 1B shows a multi-layered brazing sheet product 50 closely related to the embodiment of Fig. 1A and wherein a third aluminium alloy layer 40 is interposed between the core layer 10 and the second brazing clad layer 20. In a preferred embodiment the third aluminium alloy layer 40 has a composition within the ranges described and claimed for the first brazing clad layer 30. In another embodiment (not shown) the first brazing clad layer 30, the second brazing clad layer 20 and third brazing clad layer 40 are applied on each side of the core layer 10 and providing a 7-layered brazing sheet product.

Having now fully described the invention, it will be apparent to one of ordinary skill in the art that many changes and modifications can be made without departing from the spirit or scope of the invention as herein described.

## Claims

1. A multi-layered brazing sheet material comprising of an aluminium alloy core layer (10) provided with a first brazing clad layer material (30) on one or both sides of said aluminium core layer (10) and at least one second brazing clad layer material (20) positioned between the aluminium alloy core layer (10) and the first brazing clad layer material (30), wherein the second brazing clad layer material (20) is an Al-Si alloy brazing material having 11% to 14% Si, up to 7% Zn and up to 0.25% Mg, and wherein the first brazing clad layer material (30) is an Al-Si alloy brazing material having 6% to 9% Si, up to 1.5% Zn and up to 0.25% Mg.

2. A multi-layered brazing sheet material according to claim 1, wherein the first brazing clad layer material (30) has a Mg content of up to 0.10%, and preferably of up to 0.05%.

3. A multi-layered brazing sheet material according to claim 1 or 2, wherein the first brazing clad material layer (30) further contains up to 0.8% Fe, up to 0.3% Cu, up to 0.8% Mn, up to 0.2% Ti, and balance unavoidable impurities and aluminium.

4. A multi-layered brazing sheet material according to any one of claims 1 to 3, wherein the first brazing clad material layer (30) further contains up to 0.8% Fe, up to 0.3% Cu, up to 0.2% Mn, up to 0.2% Ti, and balance unavoidable impurities and aluminium.

5. A multi-layered brazing sheet material according to any one of claims 1 to 4, wherein the Zn content in the second brazing clad material layer (20) is higher than in the first brazing clad material layer (30), and preferably at least 200% of the Zn content of the first brazing clad material layer, and more preferably at least 300%.

6. A multi-layered brazing sheet material according to any one of claims 1 to 5, wherein the second brazing clad material layer (20) has a Zn content in the range of 1.0% to 7%, and preferably in the range of 1.5% to 6.0%.

7. A multi-layered brazing sheet material according to any one of claims 1 to 6, wherein the first brazing clad material layer (30) has a Zn content in the range of up to 1.0%, and preferably in the range of up to 0.5%.

8. A multi-layered brazing sheet material according to any one of claims 1 to 7, wherein the second brazing clad layer material (20) further contains one or more wetting elements, preferably selected from the group consisting of Bi, Pb, Li, Sb, Se, Y, and Th, and wherein the total amount of the wetting elements is in a range of 0.01% to 0.5%, and preferably the second brazing clad layer material (20) furthers contains Bi as the wetting element in a range of 0.01% to 0.5%, and preferably in a range of 0.01% to 0.25%.

9. A multi-layered brazing sheet material according to any one of claims 1 to 8, wherein the first brazing clad layer material (30) further contains one or more wetting elements, preferably selected from the group consisting of Bi, Pb, Li, Sb, Se, Y, and Th, and wherein the total amount of the wetting elements is in a range of 0.01% to 0.5%, and preferably the first brazing clad layer material (30) furthers contains Bi as the wetting element in a range of 0.01% to 0.5%, and preferably in a range of 0.01% to 0.25%.

10. A multi-layered brazing sheet material according to any one of claims 1 to 9, wherein there is provided a third brazing clad layer material (40) positioned between the aluminium core alloy layer (10) and the second braze clad layer material (20).

11. A multi-layered brazing sheet material according to any one of claims 1 to 10, wherein there is provided a third brazing clad layer material (40) positioned between the aluminium core alloy layer (10) and the second braze clad layer material (20), and wherein the third brazing clad layer material (40) is an Al-Si alloy brazing material having 6% to 9% Si, up to 1.5% Zn and up to 0.25% Mg.

12. A multi-layered brazing sheet material according to any one of claims 1 to 11, wherein the multi-layered brazing sheet material is a roll bonded multi-layered brazing sheet material.

13. A multi-layered brazing sheet material according to any one of claims 1 to 12, wherein the first brazing clad material layer (30) has a thickness which is 1% to 15% of the entire thickness of said multi-layered aluminium alloy brazing sheet material, and the second brazing clad material layer (20) has a thickness of 3% to 20% of the entire thickness of said multi-layered brazing sheet material.

14. Use of a multi-layered brazing sheet material according to any one of claims 1 to 13 for the production of a heat exchanger of a motor vehicle, preferably in a controlled atmosphere brazing process.

15. A method of manufacturing an assembly of brazed components, comprising the steps of:
a.) forming the components of which at least one is made from a multi-layered brazing sheet material according to any one of claims 1 to 13;
b.) assembling the components into an assembly;
c.) brazing the assembly in a controlled inert gas atmosphere; and
d.) cooling of the brazed assembly.
